Europäisches Patentamt

European Patent Office

Office européen des brevets

(11) Numéro de publication: **0 195 697**

**A1**

## (12) DEMANDE DE BREVET EUROPEEN

(21) Numéro de dépôt: **86400340.5**

(22) Date de dépôt: **18.02.86**

(51) Int. Cl.⁴: **G05F 1/70** , H02P 7/622

(30) Priorité: **20.02.85 FR 8502431**

(43) Date de publication de la demande:
**24.09.86 Bulletin 86/39**

(84) Etats contractants désignés:
**AT BE CH DE GB IT LI LU NL SE**

(71) Demandeur: **SOCIETE D'ETUDES ET DE RECHERCHES DE L'ECOLE NATIONALE SUPERIEURE D'ARTS ET METIERS en abrégé S E R A M**
**151, Boulevard de l'Hôpital**
**F-75013 Paris(FR)**

(72) Inventeur: **Desdoits, Raymond**
**3, Avenue René Descartes**
**F-91000 Evry Courcouronnes(FR)**
Inventeur: **Gheysens, Richard**
**20, Rue Camille Blanc**
**F-94800 Villejuif(FR)**

(74) Mandataire: **Robert, Jean-Pierre et al**
**CABINET BOETTCHER 23, rue la Boétie**
**F-75008 Paris(FR)**

(54) Appareil pour réduire l'énergie consommée par les moteurs électriques.

(57) Des transformateurs de tension (3) et d'intensité (19) alimentent un échantillonneur (21) qui fournit des valeurs instantanées à un microprocesseur (16) capable de calculer la puissance fournie au moteur et la puissance utile de ce dernier en calculant les pertes à partir de coefficients constants (R, K, G₀) pour les pertes dans le fer et les pertes Joule ainsi que le rendement, après quoi selon que les valeurs successives du rendement calculé sont croissantes ou décroissantes, le microprocesseur (16) augmente ou diminue la durée effective du passage du courant à chaque cycle en commandant des thyristors (12).

Fig-3

Appareil pour réduire l'énergie consommée par les moteurs électriques.

L'invention a pour objet un appareil qui tend à réduire à la valeur minimale strictement nécessaire l'énergie consommée par un moteur électrique à toutes les valeurs de la charge de ce moteur, en tenant à tout instant le rendement de ce dernier à une valeur optimale.

On connaît par le document US.A-4.052.648 un appareil qui a le même rôle mais cet appareil tend à réduire l'énergie consommée par un moteur à un courant alternatif en agissant sur le déphasage qui existe entre la tension et le courant. La tension et le courant sont échantillonnés de manière répétitive, les phases des échantillons sont comparées ; on obtient un signal représentatif du déphasage qui sert à régler par l'intermédiaire de thyristors la fraction utile de l'onde sinusoïdale de la tension de manière inversement proportionnelle à la différence de phase entre le courant et la tension. De cette façon, on s'efforce de maintenir constante à une valeur initiale, par exemple 30°, le déphasage entre la tension et le courant en retardant le moment où la tension est fournie au moteur. Ainsi, quand la charge du moteur baisse, son facteur de puissance conserve une valeur satisfaisante, au lieu de décroître.

Cet appareil ne fonctionne pas pendant le démarrage du moteur : un circuit de temporisation le met hors service pendant la durée nécessaire (plusieurs secondes ou davantage) au démarrage du moteur jusqu'à sa vitesse normale de rotation. L'économie d'énergie apparente réalisée est importante quand le moteur est utilisé à faible charge ; cette économie décroît constamment jusqu'à devenir minime à mesure que la charge passe de 0 % à 100 %.

Un tel appareil ne convient que pour les moteurs à courant alternatif.

L'invention a pour but principal d'apporter un appareil pour économiser l'énergie consommée par un moteur électrique capable d'assurer automatiquement en permanence l'économie la plus élevée possible à toutes les valeurs de la charge de ce moteur entre 0 % et 100 %.

Un but secondaire de l'invention est de parvenir à un appareil perfectionné du type ci-dessus utilisable avec tout type de moteur électrique.

En pratique, l'efficacité avec laquelle un moteur utilise l'énergie qui lui est fournie s'exprime par son rendement. Le rendement est d'autant plus élevé que le moteur est bien adapté à sa charge. Or, très fréquemment les moteurs sont utilisés dans l'industrie avec une charge variable ou avec une charge plutôt constante mais nettement inférieure à la puissance maximale disponible sur l'arbre du moteur. Comme la tension d'alimentation de ce dernier est constante quand il est relié à un réseau de distribution électrique, cette tension crée dans le moteur un champ magnétique supérieur à celui qui serait nécessaire. Il en résulte des pertes dans le noyau en fer ainsi que dans les conducteurs du moteur et une dégradation du facteur de puissance.

La puissance utile prélevée sur l'arbre du moteur dérive de la puissance absorbée provenant du réseau électrique qui s'exprime, pour un système triphasé équilibré sinusoïdal, par la formule $P = \sqrt{3}\ U.I.\cos \Phi$. De cette puissance sont à soustraire :

-les pertes magnétiques dans le fer du stator et du rotor,

-les pertes par effet Joule dans le stator et dans le rotor,

-les pertes par frottement mécanique.

Le rendement est le rapport de la puissance utile à la puissance absorbée.

Conformément à l'invention, la tension fournie à un moteur électrique et le courant électrique absorbé par ce moteur sont échantillonnés, les valeurs obtenues de la tension et du courant servent à calculer d'une part la puissance électrique absorbée par ce moteur, d'autre part les pertes, ce qui procure une valeur représentative de la puissance utile prélevée sur l'arbre du moteur ; on obtient alors par calcul une première valeur du rendement du moteur, qui est conservée en mémoire. Après réduction de la tension efficace d'alimentation du moteur, ce qui se traduit par une réduction de la durée effective du passage du courant à travers le moteur pendant un cycle donné, un nouvel échantillonnage de la tension et du courant est effectué ainsi qu'un nouveau calcul qui procure une seconde valeur du rendement. La comparaison de la première et de la seconde valeur du rendement donne un signal de commande qui est employé à faire varier la durée effective de passage du courant à travers le moteur au cours d'un cycle donné.

Quand la seconde valeur est plus grande que la première valeur (signal de commande positif), la durée de passage du courant, ou la tension efficace avec un moteur alternatif, est réduite à nouveau. Quand la seconde valeur est plus faible que la première valeur (signal de commande négatif), la durée de passage du courant, ou la tension efficace, est augmentée. Quand les valeurs successives sont égales, aucune correction n'est faite.

De cette façon, le signal de commande issu de la comparaison de deux valeurs successives calculées du rendement régule la tension efficace, c'est-à-dire la durée de passage du courant pendant un cycle donné, au cours d'une succession d'échantillonnages, de la tension et du courant fournis au moteur, de calculs du rendement, de comparaisons des deux dernières valeurs du rendement; cette régulation maintient le rendement du moteur au plus près de sa valeur maximale possible quelle que soit la charge.

Dans un mode préféré de réalisation de l'invention, les pertes magnétiques dans le rotor sont négligées; les pertes par frottement mécanique sont fixées à une valeur constante qui peut être nulle dans certaines circonstances.

Plusieurs moyens peuvent servir à réguler la durée du passage du courant au cours d'un cycle; par exemple en agissant sur la tension d'alimentation du moteur : la modification de l'amplitude, ou la variation de la fraction utile de l'onde sinusoïdale, ou la coupure en trains successifs de l'onde sinusoïdale. De préférence, on fait varier la fraction utile de l'onde sinusoïdale de la tension à l'aide de thyristors ou de composants équivalents.

On donnera maintenant une description d'un exemple de réalisation d'un appareil conforme à l'invention. On se reportera aux dessins annexés dans lesquels :

-la figure 1 est un graphique qui montre la variation du rendement et du facteur de puissance (cos $\phi$) d'un moteur électrique asynchrone en fonction de la puissance utile fournie par ce moteur,

-la figure 2 est un graphique qui montre différentes courbes du rendement d'un moteur en fonction de la tension efficace d'alimentation à différentes valeurs de la charge de ce moteur,

-la figure 3 est un diagramme schématique d'un appareil conforme à l'invention,

-les figures 4a à 4 d sont des représentations de formes d'onde d'un réseau triphasé illustrant le fonctionnement de l'appareil de la figure 3.

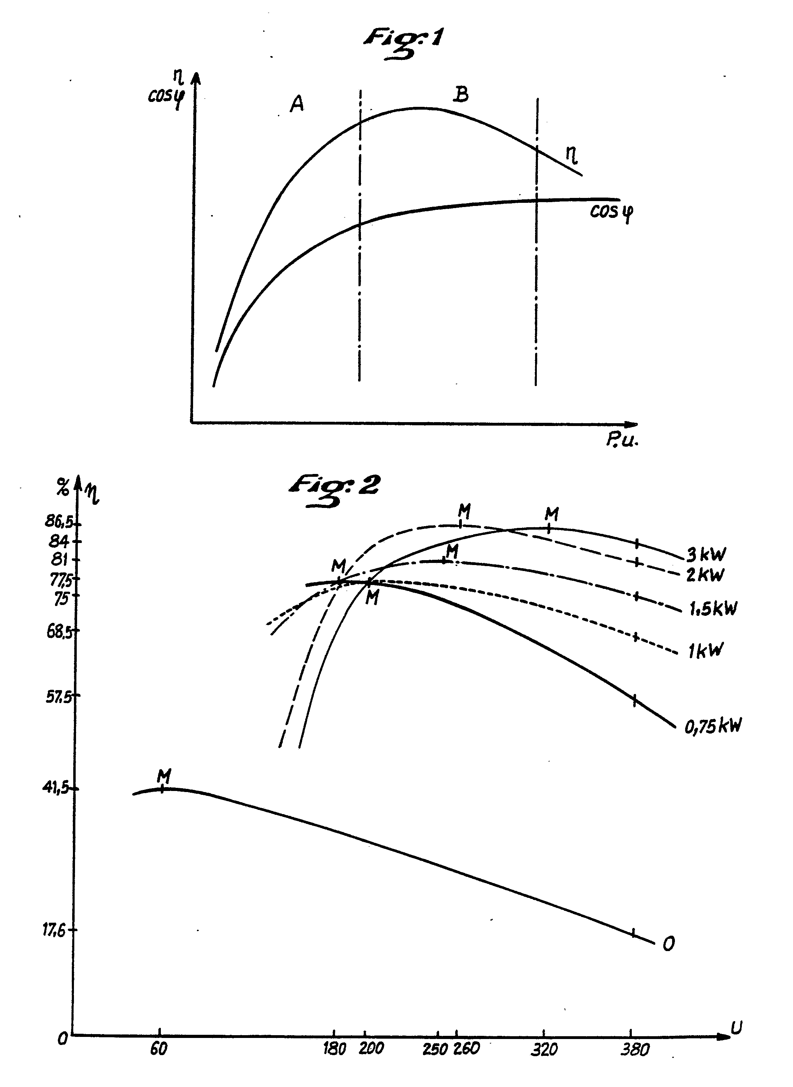

La figure 1 montre la variation du rendement (courbe $\eta$) et du facteur de puissance (courbe cos $\phi$) portés en ordonnées en fonction de la puissance utile (Pu en abscisse) fournie par un moteur électrique asynchrone. Dans une première zone A le rendement et le facteur de puissance varient fortement.Une correction pour économiser l'énergie faite dans cette zone A en fonction du rendement ou du cos $\phi$ est également efficace. Dans une seconde zone B, le rendement varie encore beaucoup, tandis que le cos $\phi$ est presque constant. Comme ce dernier varie peu dans cette zone B, une correction basée sur le facteur de puissance a peu d'effet tandis qu'une correction basée sur le rendement a un effet plus marqué quand la charge du moteur change.

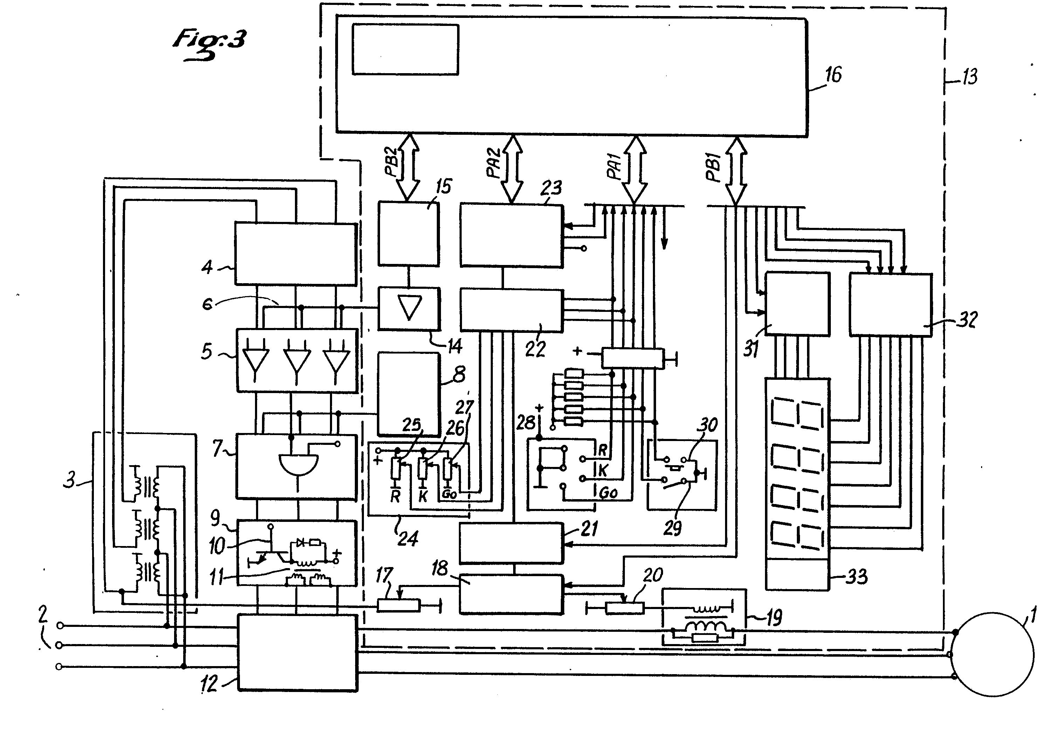

La figure 2 montre les courbes de rendement d'un moteur ayant une puissance nominale de 3 kW à une tension de 380 V, utilisé à différentes charges, respectivement 0 -0,75 -1 -1,5 -2 -3 kW. La courbe de rendement est tracée à chacune de ces charges en fonction de la tension d'alimentation (U en abscisse) fournie au moteur. Plus la charge du moteur est faible en comparaison de sa puissance nominale, plus son rendement s'élève à mesure que la tension d'alimentation est diminuée à partir de 380 V. Mais le rendement ($\eta$ en ordonnée) passe par un maximum qui est atteint d'autant plus vite que la charge est plus élevée. Après ce maximum le rendement diminue si on continue à abaisser la tension d'alimentation. Sur chaque courbe la valeur maximale du rendement est indiquée par un point M.

Le rôle de l'appareil de l'invention est de modifier la valeur efficace de la tension d'alimentation du moteur, de préférence en commandant le point d'amorçage de thyristors ou de composants équivalents à travers lesquels le moteur est alimenté, de façon que cette valeur efficace se rapproche de la valeur à laquelle correspond le rendement maximale du moteur, par exemple 260 V à 2/3 de charge, ou 250 V à 1/2 charge, ou 200 V à 1/3 de charge, ou 180 V à 1/4 de charge, pour le moteur de la figure 2.

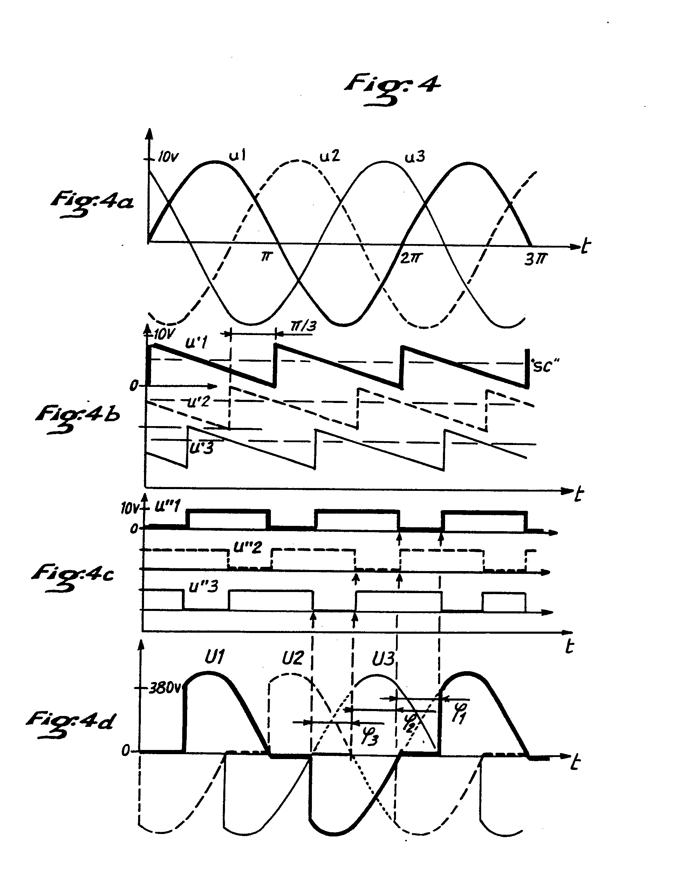

La figure 3 montre schématiquement un moteur 1, triphasé, asynchrone, alimenté en courant électrique par un réseau de distribution électrique triphasé 2 à 50 Hz. En amont du moteur 1 des transformateurs de tension 3 (figure 3) fournissent des signaux de tension $u_1, u_2, u_3$ (figure 4a) décalés de 2 $\pi/3$ dans le temps, à une valeur de 10 V par exemple, à des générateurs de rampes de tension 4. Ces rampes sont représentées sur la figure 4b par des tracés $u'_1, u'_2, u'_3$. Les signaux émis par le générateur de rampes 4 sont reçus par un comparateur 5 qui reçoit aussi un signal de commande par une ligne de commande 6. Ce comparateur 5 est de préférence un montage à base d'amplificateurs opérationnels qui comparent les rampes $u'_1,$ $u'_2, u'_3$ au signal de commande. Aux bornes de sortie du comparateur 5, on obtient des créneaux de tension $u''_1, u''_2,$ $u''_3$ (figure 4c) ; ces créneaux $u''_1, u''_2, u''_3$ sont identiques pour les trois phases et ils sont aussi décalés de 2 $\pi/3$. En outre, ils ont chacun, par rapport aux signaux de tension $u_1,$ $u_2, u_3$, un retard déterminé par le signal de commande. Après le comparateur 5, les créneaux $u''_1, u''_2, u''_3$ sont reçus par des portes 7 alimentées aussi par un oscillateur 8 à 10 kHz. Ce montage sert à hacher les signaux d'entrée pour obtenir finalement une variation de flux plus forte. Ensuite le signal arrive à un amplificateur de commande 9 constitué par des transistors 10 à émetteur commun. Le signal haché est fourni à la base des transistors 10, ce qui procure au collecteur de chacun d'eux un courant important qui alimente un transformateur d'impulsions 11 dont le secondaire est réuni à un thyristor correspondant 12 qui est monté entre le moteur 1 et les transformateurs de tension 3. La tension d'alimentation fournie au moteur 1 est représentée par les tracés $U_1, U_2, U_3$ sur la figure 4d. Cette tension est déphasée par rapport à la tension du réseau électrique 1 (figure 4a) d'une valeur $\Phi_1, \Phi_2, \Phi_3$ qui dépend du signal de commande qui arrive par la ligne 6. Le retard de l'alimentation à chaque alternance tend à fournir au moteur une tension efficace aussi proche que possible de la valeur de la tension à laquelle correspond le rendement maximum M en fonction de la charge du moteur et quelle que soit cette charge.

La ligne 6 est la ligne de sortie d'une unité de commande 13 entourée d'un trait interrompu sur la figure 3. A l'intérieur de cette unité de commande 13, la ligne 6 provient d'un amplificateur 14 qui est relié à un convertisseur numérique-analogique 15 lui-même relié à un port PB2 d'un microprocesseur 16. Ce dernier est réuni à d'autres circuits de l'unité de commande 13 qui lui fournissent des informations de la façon suivante.

Une ligne dérive une tension simple u en provenance de l'un des transformateurs de tension 3, donc en amont des thyristors 12, et la fournit à un potentiomètre de réglage 17 relié à un multiplexeur 18. Un transformateur d'intensité 19 est branché sur l'un des conducteurs d'alimentation du moteur 1 entre celui-ci et les thyristors 12. Ce transformateur d'intensité 19 alimente un potentiomètre de réglage 20 qui est également relié au multiplexeur 18. Ce dernier est suivi d'un circuit échantillonneur-bloqueur 21 comprenant un amplificateur d'entrée, une mémoire servant de bloqueur et un amplificateur suiveur. L'échantillonnage de la tension et de l'intensité est fait à l'aide d'un montage comprenant une diode rapide en parallèle avec un condensateur pour délivrer des pics. Les signaux d'échantillonnage sont reçus par un multiplexeur général 22 à la suite duquel se trouve un convertisseur analogique-numérique 23 relié à un port PA2 du microprocesseur 16. Ce dernier est donc en mesure de calculer à tout instant la puissance fournie par le réseau électrique 2 à partir de l'intensité I qui traverse le moteur 1 et de la tension U du réseau 2, en appliquant la formule :

$$P \; fournie = \frac{1}{n} \sqrt{3} \; (\sum_{1}^{n} U_i \times I_i) \quad (A),$$

pour n valeurs instantanées de U et de I; cette formule ne nécessite pas de connaître le cos $\phi$ dont la signification serait faussée par le hachage de l'onde sinusoïdale d'alimentation du moteur.

Dans l'exemple décrit ici, le microprocesseur 16 calcule :

-les pertes dans le fer du stator à l'aide d'un coefficient K en appliquant la formule :

Pertes fer = K x U² (B)

les pertes dans le fer du rotor étant faibles et négligeables en première approximation ;

-les pertes par effet Joule dans le stator, à l'aide d'un coefficient R en appliquant la formule :

Pertes Joule = 3 RI² ;

-les pertes par effet Joule dans le rotor à l'aide d'un coefficient $G_0$ en appliquant la formule :

Pertes Joule rotor = $G_0$x(P fournie-KU² -RI²)²

ce qui fait que, en définitive, les pertes par effet Joule dans le stator et dans le rotor sont calculées au moyen de la formule :

Pertes Joule totales = 3 RI²+$G_0$(P fournie-KU²-RI²)² (C)

Les pertes par frottement mécanique sont constantes et faibles, en général; elles sont négligées.

La valeur du coefficient K peut être connue par l'un des trois moyens suivants :

-elle figure dans la fiche technique du moteur fournie par le constructeur,

-elle se calcule d'après le poids de la partie fer du stator et les pertes en W/kg pour une induction donnée. On obtient alors la valeur de K par la formule :

$$K = \frac{Pfer}{U^2},$$

-elle s'obtient par des essais à vide du moteur permettant de tracer la courbe Pfer = f(u).

La valeur du coefficient R qui représente la résistance ohmique des enroulements du stator peut être connue par l'un des deux moyens suivants :

-elle figure dans la fiche technique du moteur,

-elle est mesurée à l'aide d'un ohmmètre ou autrement.

La valeur du coefficient $G_0$ est une valeur approximative déterminée à l'origine et non modifiée par la suite; cette manière de faire introduit dans la correction de la puissance du moteur une erreur de 1 à 2 pour 1000.La valeur de $G_0$ peut être déterminée d'après la formule :

s = $G_0$(P fournie -KU² -3 RI²)

dans laquelle :

s = glissement réel mesuré pour une charge donnée constante du moteur,

P fournie = puissance mesurée fournie au moteur,

U et I = tension et intensité efficaces fournies au moteur,

K et R étant déterminés préalablement.

Les valeurs constantes ainsi obtenues de K, R et $G_0$sont introduites dans la mémoire du microprocesseur 16; on peut introduire ces valeurs sous forme numérique à l'aide d'un clavier classique, ainsi qu'il est connu. Cependant, il est plus judicieux de se dispenser de l'emploi d'un clavier pour cette seule utilisation et d'introduire ces valeurs sous forme analogique puisque, par ailleurs, le microprocesseur 16 reçoit déjà sous forme analogique les valeurs instantanées de U et de I.

A cette fin il existe un groupe 24 de trois potentiomètres 25, 26, 27 affectés respectivement aux coefficients R, K, $G_0$ qui sont d'une part alimentés en courant électrique et d'autre part reliés au multiplexeur 22. A ces potentiomètres correspond un commutateur 28 ayant trois positions actives R, K, $G_0$ correspondantes à ces potentiomètres et une position de repos. Ce commutateur 28 est associé à un interrupteur 29 de réglage et à un bouton poussoir 30 d'enregistrement. Cet ensemble est relié à un port PA1 du microprocesseur 16.

Un autre port PB1 du microprocesseur 16 est relié à deux décodeurs 31, 32 qui sont raccordés à un afficheur 33.

L'interrupteur 29 permet de mettre le microprocesseur 16 en mode réglage. Après le choix par le commutateur 28 du coefficient à introduire, on règle le potentiomètre 25 ou 26 ou 27 correspondant jusqu'à lire sur l'afficheur 33 la valeur exacte que l'on désire introduire puis on enregistre cette valeur dans le microprocesseur 16 à l'aide du bouton poussoir 30.

Le microprocesseur 16 est alors en mesure de calculer la puissance fournie au moteur à partir des valeurs mesurées de U et de I, en appliquant la formule (A) indiquée plus haut, de calculer aussi les pertes dans le fer et les pertes par effet Joule à partir des valeurs mesurées de U et de I et des valeurs constantes des coefficients R, K, $G_0$, en appliquant respectivement les formules (B) et (C) indiquées plus haut. De là il calcule aussi la puissance utile disponible sur l'arbre du moteur et, ensuite, le rendement.

Il est évident que d'autres formules moins approximatives pourraient être utilisées à la place de celles qui sont employées ici. Les pertes mécaniques pourraient être évaluées à une valeur supposée constante et introduite dans la mémoire du microprocesseur, ou évaluée à l'aide d'une formule approximative en fonction par exemple de la puissance utile du moteur, ce qui précède n'étant donné qu'à titre d'exemple.

On a décrit l'appareil de l'invention appliqué à un moteur triphasé asynchrone; il est clair qu'il pourrait servir aussi avec un moteur monophasé ou avec un moteur synchrone, ou avec un moteur à courant continu si on alimentait ce dernier en courant intermittent cyclique sous le contrôle de l'appareil.

Pendant le fonctionnement, les valeurs de U et de I sont mesurées pendant 4 périodes à raison de 32 points de mesure instantanés par période, soit 128 valeurs pour U et 128 valeurs pour I. Le rôle du bloqueur de l'échantillonneur-bloqueur 21 est de tenir constante la valeur mesurée pendant la conversion analogique-numérique. Le rendement est calculé et deux valeurs successives du rendement sont comparées; selon que la différence de ces valeurs est positive ou négative, le microprocesseur 16 retarde ou avance l'allumage des thyristors 12 ainsi qu'on l'a expliqué plus haut.

Des essais ont montré que l'économie permise par l'appareil de l'invention est d'autant plus grande que le moteur est utilisé à une charge plus faible par rapport à sa puissance nominale.

Pour un moteur triphasé asynchrone 380 V, 50 Hz, d'une puissance nominale de 4,5 kW, les résultats suivants ont été constatés :

| Charge en fonction de la puissance nominale | Puissance absorbée en W | | Economie de puissance consommée | |
| --- | --- | --- | --- | --- |
| | sans l'appareil | avec l'appareil | absolue en W | en % |
| 1/6 | 1 300 | 900 | 340 | 26 |
| 1/3 | 1 968 | 1 770 | 200 | 10 |
| 2/3 | 3 600 | 3 360 | 240 | 6,67 |

Pendant les essais à 1/3 de la charge nominale, il a été constaté que sans l'appareil le rendement était de 0,747 et le cos φ de 0,435, tandis qu'avec l'appareil de l'invention le rendement était de 0,808 et le cos φ de 0,806. On voit que la réduction de la puissance consommée par régulation à partir du rendement calculé a aussi pour conséquence une amélioration du facteur de puissance, ce que le graphique de la figure 1 permet de prévoir, quand le moteur est utilisé en dessous de la moitié de sa charge nominale.

Il ressort de ce qui précède que l'appareil de l'invention apporte l'avantage de maintenir le rendement d'un moteur électrique automatiquement et en permanence à une valeur optimale quelle que soit la charge de ce moteur, sans nécessiter l'emploi de capteurs mécaniques ou équivalents autres que des moyens de mesure de la tension et de l'intensité.

Il est évident pour l'homme de l'art que l'invention n'exclut pas l'emploi de capteurs si on accepte cette complication supplémentaire. Il est possible, en pratique, d'utiliser de tels capteurs afin d'obtenir la valeur réelle instantanée du coefficient R (résistance ohmique des enroulements du stator) ou la valeur réelle instantanée de la vitesse de rotation du moteur d'où découle la valeur du coefficient s. On connaît des moyens qui fournissent la valeur de R en fonction de l'échauffement du moteur. Cette valeur variable R peut être fournie directement, en permanence ou périodiquement, aux moyens de calcul 16 et à l'unité de commande 13, à la place de la valeur constante de R. De manière analogue, la vitesse de rotation réelle instantanée du moteur peut être mesurée par un capteur de vitesse quelconque approprié.

La valeur mesurée peut être fournie en permanence ou périodiquement aux moyens de calcul 16, ce qui leur permet de déterminer sans difficulté la valeur de s, plus facilement et plus exactement que par le calcul effectué à partir du coefficient $G_o$ comme expliqué plus haut. Dans ce cas seul le coefficient K reste un coefficient constant.

On remarquera aussi que l'appareil de l'invention peut être adapté facilement à son emploi avec un moteur continu. Dans ce cas les valeurs instantanées de la tension et de l'intensité sont connues directement sans transformateurs et il faut ajouter aux thyristors, de façon connue en soi, un organe qui commande leur extinction sous le contrôle de l'unité de commande 13 afin que la tension moyenne "continue" d'alimentation du moteur corresponde à la valeur maximale du rendement.

**Revendications**

1. Appareil pour le réglage à une valeur optimale du rendement d'un moteur électrique quelle que soit la charge de ce moteur, comprenant :

:

-des moyens d'échantillonnage (3,17,18,21) de la tension d'alimentation de ce moteur aptes à fournir une valeur moyenne de plusieurs valeurs instantanées de cette tension,

-des moyens d'échantillonnage (19,20,12,21) de l'intensité du courant absorbé par ce moteur aptes à fournir une valeur moyenne de plusieurs valeurs instantanées de cette intensité,

-des moyens de calcul (16) aptes à calculer le rendement du moteur à partir de la puissance électrique fournie à ce moteur et de certaines au moins des pertes d'énergie dans ce moteur, et à fournir un signal de sortie qui varie selon la différence positive ou négative des valeurs successives du rendement,

-des moyens de commande (4,5,7,9,12) aptes à être réunis électriquement au moteur et à être commandés par le signal de sortie des moyens de calcul pour faire varier pendant des cycles successifs la durée effective de passage du courant à travers le moteur,

-de sorte que la durée effective de passage du courant est régulée en fonction de la différence des valeurs successives calculées du rendement dans le sens d'un rendement plus élevé.

2. Appareil selon la revendication 1, caractérisé en ce que les moyens d'échantillonnage de la tension comprennent au moins un transformateur de tension (3) et les moyens d'échantillonnage de l'intensité comprennent au moins un transformateur d'intensité (19) et ces transformateurs (3, 19) sont reliés à un circuit échantillonneur-bloqueur (21) réuni aux moyens de calcul (16) par l'intermédiaire d'un convertisseur analogique-numérique (23).

3. Appareil selon la revendication 1, caractérisé en ce que les moyens de calcul (16) sont munis de moyens d'introduction (24, 28, 30) de la valeur d'au moins trois coefficients constants (R, K, G$_0$) utilisables pour le calcul des pertes.

4. Appareil selon la revendication 3, caractérisé en ce que les moyens d'introduction des coefficients constants comprennent des potentiomètres (25, 26, 27) réunis aux moyens de calculs (16) par l'intermédiaire d'un convertisseur analogique-numérique (23).

5. Appareil selon la revendication 1, caractérisé en ce que les moyens de commande de la durée effective du passage du courant à travers le moteur pendant des cycles successifs comprennent des thyristors (12).

6. Appareil selon la revendication 1, caractérisé en ce que les moyens de commande de la durée effective du passage du courant à travers le moteur comprennent un générateur de rampes de tension (4), des comparateurs (5) comparant ces rampes de tension au signal de sortie des moyens de calcul (16), ces comparateurs (5) fournissant des créneaux de tension dont la durée est égale à la durée du passage du courant à chaque cycle à travers le moteur.

7. Appareil selon la revendication 3, caractérisé en ce que les moyens d'introduction (24, 28, 30) sont des moyens permettant de fournir aux moyens de calcul (16) la valeur d'un coefficient (R) en relation avec les pertes ohmiques dans les enroulements du stator, d'un coefficient (K) en relation avec les pertes dans le fer du stator au moins, d'un coefficient (G$_0$) en relation avec les pertes ohmiques dans les enroulements du rotor.

8. Appareil selon la revendication 1, caractérisé en ce que les moyens de calcul (16) sont associés à au moins un capteur d'un jeu de capteurs comprenant d'une part un capteur fournissant un signal lié à la valeur réelle de la résistance ohmique des enroulements du stator, d'autre part un capteur fournissant un signal lie à la vitesse réelle de rotation du moteur.

9. Appareil selon la revendication 1 utilisé avec un moteur à courant continu, caractérisé en ce que les thyristors (12) sont associés à un organe de commande d'extinction placé sous le contrôle de l'unité de commande (13).

*Fig. 1*

*Fig. 2*

Fig.3

0 195 697

*Fig: 4*

*Fig: 4a*

*Fig: 4b*

*Fig: 4c*

*Fig: 4d*

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | US-A-4 052 648  (F.J. NOLA) | | G 05 F      1/70<br>H 02 P     7/622 |
| | --- | | |
| A | WO-A-8 402 404  (FAIRFORD ELECTRONICS LTD.)<br>* Figure 1; abrégé; page 3, lignes 8-14, 32-36; page 5, lignes 18-36; revendications * | 1 | |
| | --- | | |
| A | DE-A-3 116 047  (MITSUBISHI DENKI K.K.) | | |
| | --- | | |
| A | US-A-4 459 529  (L.S. JOHNSON) | | |
| | --- | | |
| A | US-A-4 293 905  (K.E. OPAL)<br>* Abrégé; figure 1 * | 9 | DOMAINES TECHNIQUES RECHERCHES (Int. Cl.4)<br><br>G 05 F<br>H 02 P |
| | ----- | | |

Le présent rapport de recherche a été établi pour toutes les revendications

| Lieu de la recherche<br>LA HAYE | Date d'achèvement de la recherche<br>28-04-1986 | Examinateur<br>BEYER F. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille. document correspondant

OEB Form 1503 03 82